(19) Europäisches Patentamt
European Patent Office
Office européen des brevets

(11) **EP 2 573 899 A1**

(12) **EUROPÄISCHE PATENTANMELDUNG**

(43) Veröffentlichungstag:
    **27.03.2013 Patentblatt 2013/13**

(51) Int Cl.:
    *H02J 7/00* (2006.01)          *H02M 3/335* (2006.01)
    *B60L 11/18* (2006.01)

(21) Anmeldenummer: **11182292.0**

(22) Anmeldetag: **22.09.2011**

(84) Benannte Vertragsstaaten:
    **AL AT BE BG CH CY CZ DE DK EE ES FI FR GB
    GR HR HU IE IS IT LI LT LU LV MC MK MT NL NO
    PL PT RO RS SE SI SK SM TR**
    Benannte Erstreckungsstaaten:
    **BA ME**

(71) Anmelder: **Siemens Aktiengesellschaft
    80333 München (DE)**

(72) Erfinder: **Schierling, Hubert
    91052 Erlangen (DE)**

(54) **Energieversorgungseinheit mit seriellem Hochsetzsteller**

(57)     Es wird eine Energieversorgungseinheit (2), insbesondere für einen Elektromotor (4) eines Elektrofahrzeugs, angegeben. Die Energieversorgungseinheit (2) umfasst einen Gleichspannungs-Wandler (8) mit einem Primärtor (15) zum Anschluss an einen Akkumulator (6) und mit einem Sekundärtor (19) zur Speisung eines Gleichspannungs-Zwischenkreises (27). Ein Niederpotential-Ausgang (22) des Sekundärtors (19) ist dabei mit einem Hochpotential-Eingang (16) des Primärtors (15) kurzgeschlossen.

FIG 1

EP 2 573 899 A1

**Beschreibung**

Die Erfindung betrifft eine Energieversorgungseinheit, welche insbesondere für einen Elektromotor eines Elektrofahrzeugs vorgesehen ist.

Die Weiterentwicklung von Elektrofahrzeugen für den Straßenverkehr als Alternative für Fahrzeuge mit Verbrennungsmotor wird derzeit mit einem hohen Aufwand vorangetrieben. Hierbei werden parallel verschiedene Entwicklungsziele und Entwicklungsansätze verfolgt. Eines dieser Entwicklungsziele ist die stetige Steigerung der Reichweite der Elektrofahrzeuge sowie die Aufrechterhaltung der vollen Motorleistung über die gesamte Reichweite.

Im Fokus liegt dabei unter anderem das Energieversorgungssystem des Elektrofahrzeugs, das während der Fahrt den Elektromotor mit elektrischer Energie aus einem Akkumulator versorgt. Das Energieversorgungssystem eines herkömmlichen Elektrofahrzeugs umfasst typischerweise einen Wechselrichter, der die von dem Akkumulator zur Verfügung gestellte Gleichspannung in eine meist mehrphasige Wechselspannung (Antriebsspannung) für den Elektromotor umwandelt. Die Motorleistung hängt wesentlich von dem Betrag dieser Antriebsspannung ab, die wiederum - bei einem klassischen, direkt aus dem Akkumulator gespeisten Wechselrichter - durch die Akkumulatorspannung begrenzt ist. Da die Akkumulatorspannung mit fortschreitender Entleer des Akkumulator typischerweise allmählich abnimmt, verringert sich bei Energieversorgungseinheiten der vorstehend beschriebenen Art auch die maximal generierbare Leistung des Elektromotors während der Fahrt sukzessive. Dies hat zur Folge, dass das Elektrofahrzeug bereits lange vor der vollständigen Entladung des Akkumulators einen spürbaren Leistungsabfall erfährt.

Zur Vermeidung dieses Problems wird derzeit mitunter ein Gleichspannungs-Wandler (DC-DC-Wandler) zwischen den Akkumulator und den Wechselrichter geschaltet, der die Akkumulatorspannung in eine von dem Betrag der letzteren unabhängige Zwischenkreis-Spannung wandelt, die dem Wechselrichter über einen (Gleichspannungs-)Zwischenkreis zugeführt wird. Der DC-DC-Wandler ist dabei insbesondere als Hochsetzsteller ausgeführt, der die Zwischenkreisspannung mit einem die Akkumulatorspannung übersteigendem Betrag erzeugt. Der zusätzliche DC-DC-Wandler bedingt jedoch - insbesondere im Betrieb als Hochsetzsteller zusätzliche Verluste an elektrischer Energie, wodurch sich der Wirkungsgrad des Energieversorgungssystems verschlechtert. Zudem verursacht der DC-DC-Wandler einen zusätzlichen Material- und Montageaufwand, der das Energieversorgungssystem erheblich verteuert. Schließlich trägt der zusätzliche DC-DC-Wandler in signifikantem Maß zu dem Gewicht und Bauvolumen des Energieversorgungssystems bei.

Der Erfindung liegt die Aufgabe zugrunde, eine effektive, gleichzeitig aber vergleichsweise unaufwändig herstellbare Energieversorgungseinheit, insbesondere für den Elektromotor eines Elektrofahrzeugs anzugeben.

Diese Aufgabe wird erfindungsgemäß durch die Merkmale des Anspruchs 1 gelöst. Die rückbezogenen Ansprüche beinhalten vorteilhafte und teilweise für sich selbst erfinderische Weiterbildungen dieser Erfindung.

Die hier beschriebene Energieversorgungseinheit ist insbesondere für einen Elektromotor eines Elektrofahrzeugs oder eines Hybridfahrzeugs vorgesehen. Sie umfasst einen DC-DC-Wandler mit einem Primärtor zum Anschluss an eine Gleichspannungsquelle, insbesondere einen Akkumulator und mit einem Sekundärtor zur Speisung eines (Gleichspannungs-)Zwischenkreises. Ein Niederpotential-Ausgang des Sekundärtors ist hierbei mit einem Hochpotential-Eingang des Primärtors verschaltet, d.h. leitend verbunden.

Durch diese Schaltung wird der DC-DC-Wandler sekundärseitig zu dem Akkumulator in Reihe geschaltet. Hierbei ergibt sich die Zwischenkreisspannung im Betrieb der Energieversorgungseinheit (und dabei insbesondere bei angeschlossenem Akkumulator) aus der Summe der Akkumulatorspannung und der zwischen dem Niederpotential-Ausgang und einem Hochpotential-Ausgang des Sekundärtors anliegenden Sekundärspannung des DC-DC-Wandlers. Der DC-DC-Wandler muss somit nicht die gesamte Zwischenkreisspannung erzeugen, sondern überbrückt lediglich die zwischen dem Betrag der Akkumulatorspannung und einem vorgegebenen Soll- oder Mindestwert für die Zwischenkreisspannung fehlenden Differenzspannung. Der DC-DC-Wandler kann hierdurch vergleichsweise klein, insbesondere nur für einen Teil der erforderlichen Gesamtantriebsleistung ausgelegt werden. Durch den klein dimensionierten DC-DC-Wandler wird einerseits der durch das Energieversorgungssystem verursachte Energieverlust reduziert. Andererseits kann die Energieversorgungseinheit vergleichsweise kompakt und gewichtsarm realisiert werden. Schließlich ermöglicht die kleine Auslegung des DC-DC-Wandlers eine besonders kostengünstige Realisierung der Energieversorgungseinheit, zumal der Einsatz teurer Hochleistungselektronik nicht erforderlich ist.

Bevorzugt wird der DC-DC-Wandler durch den Akkumulator mit elektrischer Energie versorgt.

In zweckmäßiger Ausführung umfasst die Energieversorgungseinheit zusätzlich zu dem DC-DC-Wandler einen Wechselrichter zur Erzeugung einer Wechselspannung für den Elektromotor. Ein Hochpotential-Eingang, der einen Bestandteil des Gleichspannungstors dieses Wechselrichters bildet, ist hierbei über den Zwischenkreis mit einem Hochpotential-Ausgang des Sekundärtors des DC-DC-Wandlers verbunden. Ein Niederpotential-Eingang des Gleichspannungstors ist dagegen über den Zwischenkreis mit einem Niederpotential-Batterieanschluss der Energieversorgungseinheit verbunden, an den bestimmungsgemäß der Minus-Pol des Akkumulators anzuschließen ist. Bei angeschlossenem Akkumulator ist das Gleichspannungstor des Wechselrichters somit unmittelbar mit dem Minus-Pol des Akkumulators verbunden.

Zur weiteren Effizienzsteigerung der Energieversorgungseinheit umfasst die Energieversorgungseinheit in vorteilhafter Weiterbildung Mittel zur Überbrückung des Sekundärtors des DC-DC-Wandlers. Durch diese Mittel wird der DC-DC-Wandler sekundärseitig überbrückt, solange die Akkumulatorspannung den vorgegebenen Soll- oder Mindestwert der Zwischenkreisspannung nicht unterschreitet. Der Zwischenkreis und der daran angeschlossene Wechselrichter werden in diesem Fall also direkt aus dem Akkumulator gespeist. Der DC-DC-Wandler bleibt in diesem Fall hingegen passiv und verursacht somit auch keinen Verlust.

Die sekundärseitige Überbrückung des DC-DC-Wandlers kann hierbei durch - bezüglich des DC-DC-Wandlers - externe Mittel erfolgen. So ist in einer bevorzugten Ausführung der Energieversorgungseinheit dem Sekundärtor des DC-DC-Wandlers ein (Überbrückungs-)Schalter nachgeschaltet, mittels welchem der Hochpotential-Ausgang und der Niederpotential-Ausgang des Sekundärtors kurzgeschlossen werden können. Bei dem Überbrückungsschalter kann es sich um einen ansteuerbaren, elektromechanischen Schalter, insbesondere um ein Relais handeln. Vorzugsweise wird als Überbrückungsschalter aber ein Halbleiterschalter, insbesondere ein MOSFET herangezogen.

Alternativ kann die Überbrückung des Sekundärtors im Rahmen der Erfindung aber auch durch entsprechende Ansteuerung interner Schaltungskomponenten des DC-DC-Wandlers erfolgen. So kann bei einem DC-DC-Wandler, der sekundärseitig mit einer aktiven Schaltbrücke ausgerüstet ist, die Überbrückung beispielsweise durch Aufsteuerung der gesamten Schaltbrücke erfolgen. Die Mittel zur Überbrückung des DC-DC-Wandlers sind in diesem Fall in der Steuerung des DC-DC-Wandlers realisiert. Die Steuerung kann insbesondere durch einen Mikrocontroller mit einem darin softwaretechnisch implementierten Steuerprogramm für den DC-DC-Wandler gebildet sein. In diesem Fall liegen die Mittel zur Überbrückung des DC-DC-Wandlers in Form von Anweisungen des Steuerprogramms vor.

Um Eingangs- und Ausgangspotentiale am DC-DC-Wandler zu entkoppeln, weist der DC-DC-Wandler in zweckmäßiger Ausführung eine galvanische Trennung zwischen dem Primärtor und dem Sekundärtor auf. Die Energieflusskopplung zwischen dem Primärtor und dem Sekundärtor erfolgt hier zweckmäßigerweise induktiv, d.h. durch einen Transformator. Das Windungszahlverhältnis $N_P / N_s$ zwischen Primär- und Sekundärwicklungen des Transformator ist dabei bevorzugt derart gewählt, dass es dem Verhältnis des Soll- oder Mindestwerts $U_{zmin}$ der Zwischenkreisspannung zu der Differenz dieses Soll- oder Mindestwerts und dem niedrigsten Wert $U_{Bmin}$ der Akkumulatorspannung, bei dem der Elektromotor noch eine spezifizierte Leistung liefern soll, entspricht:

$$\frac{N_P}{N_S} = \frac{U_{B\min}}{\left(U_{Z\min} - U_{B\min}\right)}$$

GLG 1

Um nicht nur den Elektromotor aus dem Akkumulator versorgen zu können, sondern auch elektrische Energie, die bei einem Bremsvorgang durch den Elektromotor generatorisch erzeugt wird, effektiv in dem Akkumulator zwischenspeichern zu können, kommt als DC-DC-Wandler vorzugsweise ein bidirektionaler Spannungswandler zum Einsatz.

In einer vorteilhaften Variante der Energieversorgungseinheit ist der DC-DC-Wandler als resonant schaltender bidirektionaler Spannungswandler (kurz: Resonanzwandler) ausgebildet. Entsprechende Resonanzwandler arbeiten besonders verlustarm. Insbesondere lässt sich mit einem solchen Resonanzwandler ein 90% übersteigender Wirkungsgrad erzielen.

In einer weiteren zweckmäßigen Ausgestaltung der Energieversorgungseinheit umfasst der DC-DC-Wandler auf seiner Primärseite und/oder auf seiner Sekundärseite eine Mehrzahl von in Serie geschalteten Schaltbrücken. Die Serienschaltung mehrerer Schaltbrücken hat die vorteilhafte Wirkung, dass über jeder einzelnen Schaltbrücke in der Serienschaltung nur ein Bruchteil der am Primärtor bzw. Sekundärtor abfallenden Spannung anliegt. Für Schaltbrücken können daher Halbleiterschalter einer vergleichsweise niedrigen Sperrspannungsklasse herangezogen werden, die vergleichsweise kompakt, verlustarm und preisgünstig sind. Aufgrund der vergleichsweise geringen Schaltverluste solcher Halbleiterschalter kann der DC-DC-Wandler in dieser Ausführung zudem mit einer besonders hohen Schaltfrequenz betrieben werden.

In einer besonders vorteilhaften Ausführungsvariante sind mehrere, insbesondere alle - primär- und sekundärseitigen - Schaltbrücken des DC-DC-Wandlers mit gleichartigen Halbleiterschaltern bestückt. Der DC-DC-Wandler kann hierdurch aus mehreren gleichartigen Modulen aufgebaut werden, was die Fertigung und Reparatur des DC-DC-Wandlers deutlich vereinfacht. Bei stark differierter Auslegung der Primär- und Sekundärseite wird der modulare Aufbau des DC-DC-Wandlers insbesondere dadurch ermöglicht, dass die Anzahl der auf der Primär- und Sekundärseite in Reihe geschalteten Schaltbrücken unterschiedlich gewählt wird. So ist bei dem DC-DC-Wandler beispielsweise primärseitig eine Reihenschaltung von mehreren, insbesondere zwei bis fünf, Schaltbrückenmodulen vorgesehen, während sekundärseitig lediglich ein einziges Schaltbrückenmodul vorhanden ist.

Ausführungsbeispiele der Erfindung werden nachfolgend anhand einer schematischen Zeichnung näher erläutert. Darin zeigen:

FIG 1          in einem Blockschaltbild eine Energieversorgungseinheit für einen Elektromotor, mit einem DC-DC-Wandler und einem diesem über einen (Gleichspannungs-)Zwischenkreis nachgeschalteten Wechselrichter,

FIG 2          in Darstellung gemäß FIG 1 eine Variante der Energieversorgungseinheit mit einem zusätzli- chem Schalter, mit dem ein Sekundärtor des DCDC-Wandlers überbrückbar ist, und

FIG 3 bis 7    in einem Blockschaltbild verschiedene Ausführungsformen des DC-DC-Wandlers.

Einander entsprechende Teile und Größen sind in allen Figuren stets mit den gleichen Bezugszeichen versehen.

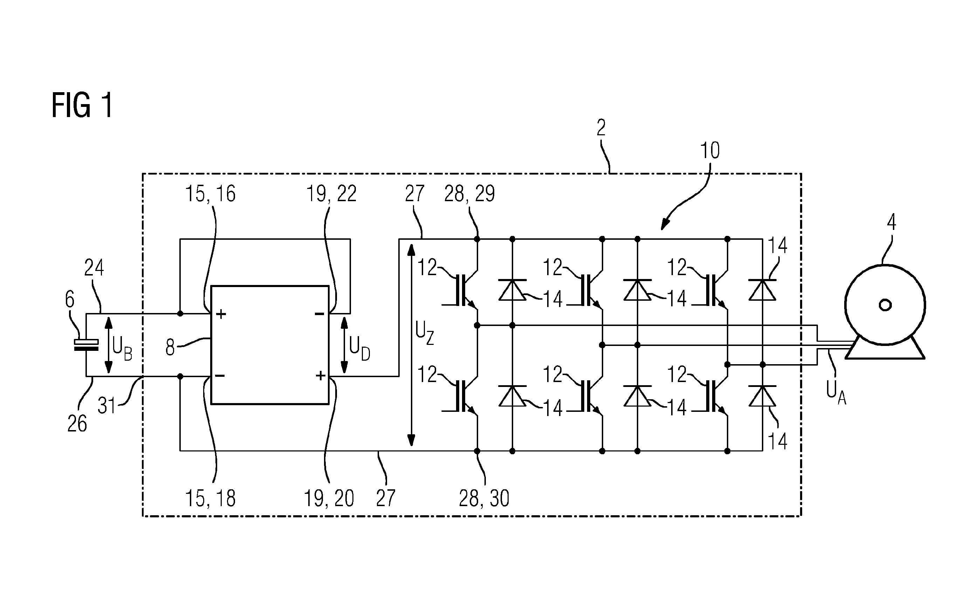

Die in FIG 1 abgebildete Energieversorgungseinheit 2 dient zur Versorgung eines dreiphasigen Elektromotors 4 eines nicht näher dargestellten Elektrofahrzeugs mit elektrischer Energie aus einem Akkumulator 6. Hierzu umfasst die Energieversorgungseinheit 2 einen DC-DC-Wandler 8 sowie einen Wechselrichter 10. Der Wechselrichter 10 umfasst zur Erzeugung einer dreiphasigen Antriebsspannung $U_A$ für den Elektromotor 4 eine Brückenschaltung mit drei Halbbrücken. Jede Halbbrücke umfasst zwei in Reihe geschaltete Halbleiterschalter 12, wobei jedem Halbleiterschalter 12 eine Freilaufdiode 14 parallelgeschaltet ist. Zwischen den beiden Halbleiterschaltern 12 ist an jede der drei Halbbrücken jeweils eine der drei Motorphasen angeklemmt.

Der DC-DC-Wandler 8 liegt als Vierpol- oder Zweitor-Baustein vor. Er weist entsprechend ein Primärtor 15 auf, das aus einem Hochpotential-Eingang 16 und einem Niederpotential-Eingang 18 gebildet ist. Der DC-DC-Wandler 8 weist des Weiteren ein Sekundär-Tor 19 auf, das aus einem Hochpotential-Ausgang 20 und einem Niederpotential-Ausgang 22 gebildet ist.

Das Primärtor 15 dient zum Anschluss des DC-DC-Wandlers 8 an den Akkumulator 6, wobei bestimmungsgemäß der Hochpotential-Eingang 16 mit einem Plus-Pol 24 des Akkumulators 6, und der Niederpotential-Eingang 18 mit einem Minus-Pol 26 des Akkumulators 6 verbunden wird.

Das Sekundärtor 19 dient zur Speisung eines (Gleichspannungs) Zwischenkreises 27. Zur Erzeugung einer in dem Zwischenkreis 27 anliegenden Zwischenkreisspannung $U_Z$ ist das Sekundärtor 19 des DC-DC-Wandlers 8 in Serie mit dem Akkumulator 6 geschaltet. Der Niederpotential-Ausgang 22 des Sekundärtors 20,22 ist mit dem Hochpotential-Anschluss 16 des Primärtors 15, und damit bei angeschlossenem Akkumulator 6 mit dessen Plus-Pol 24 kurzgeschlossen. Die Zwischenkreisspannung $U_Z$ ergibt sich somit aus der Summe der zwischen den Polen 24 und 26 erzeugten Akkumulatorspannung $U_B$ und der zwischen den Ausgängen 20 und 22 des DC-DC-Wandlers 8 erzeugten Differenzspannung $U_D$:

$$U_Z = U_B + U_D$$

<div align="right">GLG 2</div>

Die Zwischenkreisspannung $U_Z$ ist einem Gleichspannungstor 18 des Wechselrichters 10 zugeführt, das aus einem Hochpotential-Eingang 29 und einem Niederpotential-Eingang 30 gebildet wird. Der Hochpotential-Eingang 29 ist hierzu über eine Plus-Schiene des Zwischenkreises 27 mit dem Hochpotential-Ausgang des 20 des Sekundärtors 19 des DC-DC-Wandlers 8 verschaltet, während der Niederpotential-Eingang 30 über eine Minus-Schiene des Zwischenkreises 27 und einen Niederpotential-Batterieanschluss 31 der Energieversorgungseinheit 2 mit dem Minus-Pol 26 des Akkumulators 6 verschaltet ist.

Im Betrieb der Energieversorgungseinheit 2 wird der DC-DC-Wandler 8 von einer (nicht explizit dargestellten) Steuereinheit derart geregelt, dass die Zwischenkreisspannung $U_Z$ auf einem vorgegebenen Sollwert konstant gehalten wird. Der Sollwert ist hierbei vorzugsweise derart vorgegeben, dass er den Nennwert der Akkumulatorspannung $U_B$ übersteigt.

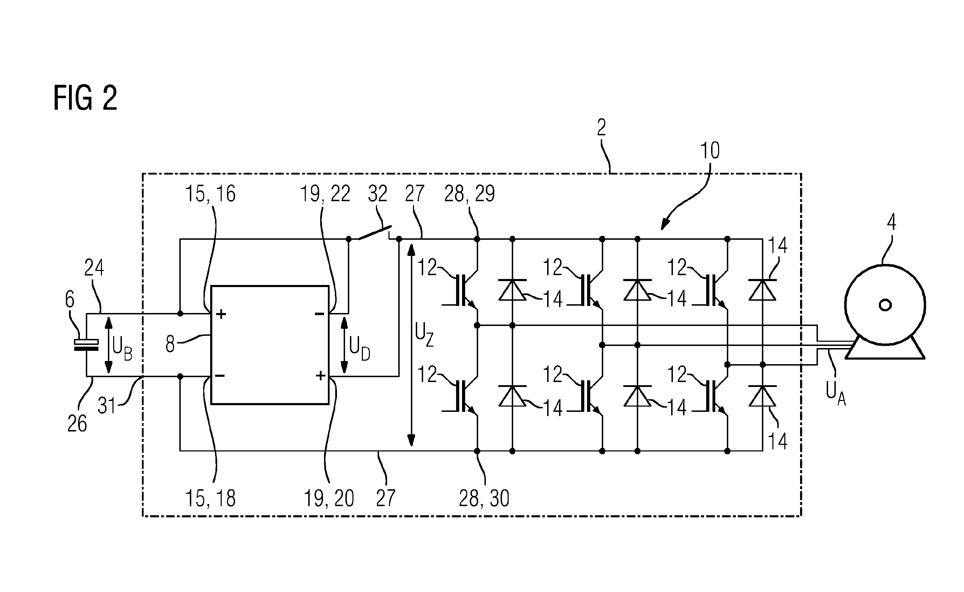

In FIG 2 ist eine zweite Ausführungsform der Energieversorgungseinheit 2 dargestellt. Diese Ausführungsform unterscheidet sich von der Energieversorgungseinheit 2 gemäß FIG 1 dadurch, dass zwischen dem Niederpotential-Ausgang 22 und dem Hochpotential-Ausgang 20 ein Überbrückungsschalter 32 vorgesehen, mittels welchem das Sekundärtor 19 des DC-DC-Wandlers 8 überbrückt werden kann. Der Überbrückungsschalter 32 ist vorzugsweise durch einen Halbleiterschalter, insbesondere einen MOSFET gebildet, der durch die (in FIG 2 ebenfalls nicht explizit dargestellte) Steuereinheit automatisch angesteuert wird.

Der DC-DC-Wandler 8 wird hierbei von der Steuereinheit nur dann angeschaltet, wenn die Akkumulatorspannung $U_B$ infolge fortgeschrittener Entladung des Akkumulators 6 einen vorgegebenen Mindestwert von beispielsweise 90% ihres Nennwerts unterschreitet. In diesem Fall werden von der Steuereinheit der Überbrückungsschalter 32 geöffnet und der DC-DC-Wandler 8 derart geregelt, dass die Zwischenkreisspannung $U_Z$ auf dem vorstehend genannten Min-

<div align="center">4</div>

destwert konstant gehalten wird.

Solange die Akkumulatorspannung $U_B$ den Mindestwert nicht unterschreitet, wird der Überbrückungsschalter 32 von der Steuereinheit geschlossen und somit der Plus-Pol 24 des Akkumulators 6 unmittelbar auf die Plus-Schiene des Zwischenkreises 27 geschaltet. Der DC-DC-Wandler 8 wird in diesem Betriebsmodus von der Steuereinheit vorzugsweise gänzlich abgeschaltet.

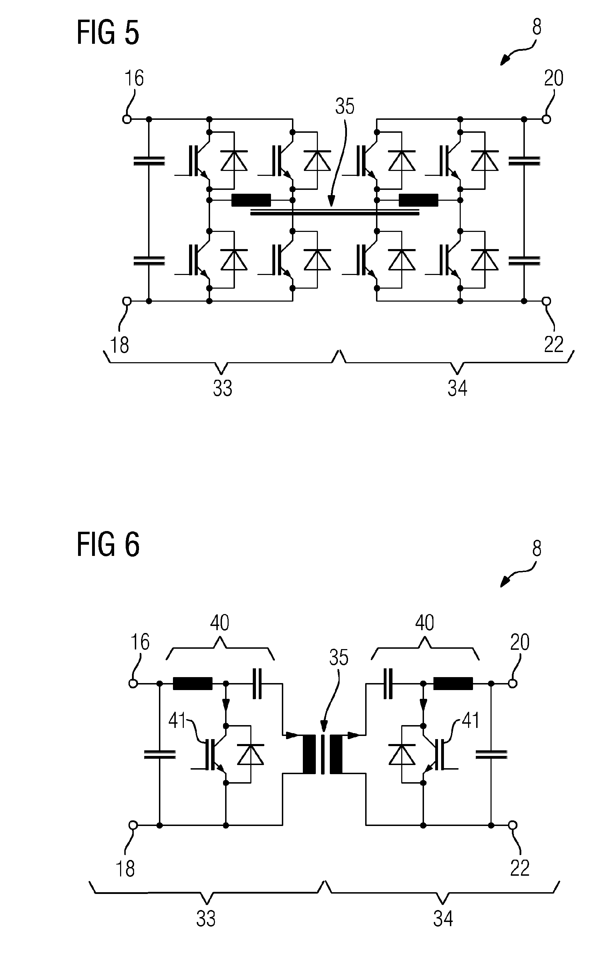

In einer (nicht explizit dargestellten) Variante der Energieversorgungseinheit 2 ist der DC-DC-Wandler mit internen Mitteln zur Überbrückung der Ausgänge 20 und 22 des Sekundärtors 19 ausgestattet, die den externen Überbrückungsschalter 32 ersetzen. Diese Mittel können beispielsweise durch eine sekundärseitige Schaltbrücke gebildet sein, wie sie in FIG 5 exemplarisch dargestellt ist, sowie durch einen Ansteuermodus, in dem die Halbleiterschalter zumindest einer Halbbrücke der Schaltbrücke aufgesteuert werden, solange die Akkumulatorspannung $U_B$ den vorgegebenen Mindestwert nicht unterschreitet. Auch bei dieser Variante der Energieversorgungseinheit 2 wird die Primärseite des DC-DC-Wandlers 8 in diesem Steuermodus nicht beschaltet und ist somit passiv.

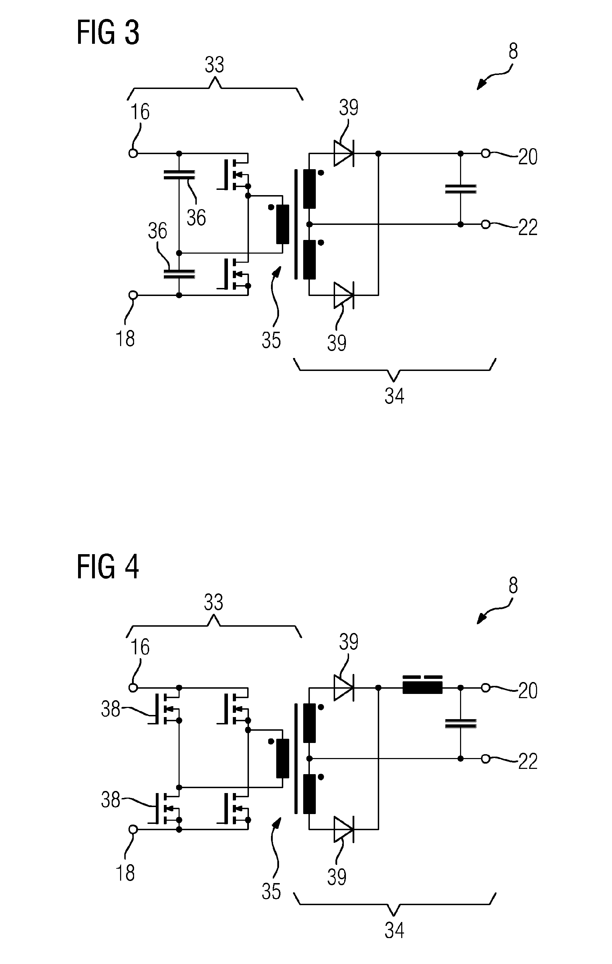

In allen vorstehend beschriebenen Ausgestaltungsvarianten wird als DC-DC-Wandler 8 vorzugsweise ein Spannungswandler eingesetzt, bei dem das Primärtor 15 von dem Sekundärtor 19 galvanisch getrennt ist. Verschiedene Ausgestaltungsvarianten des DC-DC-Wandlers 8 sind in den FIG 3 bis 7 dargestellt. Bei all diesen Ausgestaltungsvarianten erfolgt die Energieflusskopplung zwischen der Primärseite (auch als Primärkreis 33 bezeichnet) und der Sekundärseite (auch als Sekundärkreis 34 bezeichnet) des DC-DC-Wandlers 8 dabei mit Hilfe eines Transformators 35. Dem gemeinsamen Funktionsprinzip der dargestellten Ausführungsvarianten entsprechend wird die von dem Akkumulator 6 als Gleichspannung zur Verfügung gestellte Akkumulatorspannung $U_B$ mit Hilfe des Primärkreises 33 zunächst in eine Wechselspannung umgewandelt. Unter Wirkung dieser Wechselspannung wird mittels des Transformators 35 in den Sekundärkreis 34 eine induzierte Wechselspannung erzeugt, die dort zur Bildung der sekundärseitig ausgegebenen Differenzspannung $U_D$ gleichgerichtet wird. Das Verhältnis der Wicklungszahlen der Primärwindung und Sekundärwindung des Transformators 35 ist vorzugsweise gemäß GLG 1 gewählt. Daher ist beispielsweise auf $U_{Bmin}$ auf 60 % des Nennwerts der Akkumulatorspannung $U_B$, und $U_{zmin}$ auf 90 % des Nennwerts der Akkumulatorspannung $U_B$ gesetzt.

Eine besonders einfach ausgestaltete Ausführung eines entsprechenden DC-DC-Wandlers 8 ist in FIG 3 gezeigt. Dabei handelt es sich um einen sogenannten Halbbrücken-Gegentaktwandler.

In der in FIG 4 abgebildeten Variante ist der DC-DC-Wandler 8 als Vollbrücken-Gegentaktwandler ausgebildet. Diese unterscheidet sich von dem Halbbrücken-Gegentaktwandler gemäß FIG 3 dadurch, dass die dortigen Kondensatoren 36 durch aktiv ansteuerbare Halbleiterschalter 38, z.B. in Form von MOSFET's, substituiert sind.

Bei den vorstehend beschriebenen Varianten des DC-DC-Wandlers 8 gemäß FIG 3 und 4 erfolgt die Gleichrichtung im Sekundärkreis 34 jeweils passiv durch Dioden 39. Beide Varianten des DC-DC-Wandlers 8 sind somit als unidirektionale Spannungswandler ausgebildet, die eine Energieübertragung lediglich von dem Primärkreis 32 auf den Sekundärkreis 34, nicht aber in Gegenrichtung ermöglichen.

In Anwendungsfällen, in denen die Energieversorgungseinheit 2 zur Rückspeisung von elektrischer Energie aus dem Elektromotor 4 in den Akkumulator 6 geeignet sein soll, wird anstelle der in den FIG 3 und 4 gezeigten Varianten des DC-DC-Wandlers 8 vorzugsweise ein bidirektionaler Spannungswandler eingesetzt, bei dem ein Energiefluss je nach Betriebsmodus entweder aus Richtung des Primärkreises 33 in Richtung des Sekundärkreises 34 oder aber aus Richtung des Sekundärkreises 34 in Richtung des Primärkreises 33 möglich ist. Eine entsprechende Variante des DC-DC-Wandlers 8, hier in Form eines bidirektionalen Vollbrückenwandlers, ist in FIG 5 abgebildet.

In einer weiteren rückspeisefähigen Variante ist der DC-DC-Wandler 8 gemäß FIG 6 als Resonanzwandler ausgebildet. In dieser Bauform umfasst der DC-DC-Wandler 8 sowohl im Primärkreis 33 als auch im Sekundärkreis 34 jeweils einen Reihenschwingkreises 40, wobei die Reihenschwingkreise 40 durch jeweils einen schnell schaltenden Halbleiterschalter 41 resonant angeregt werden.

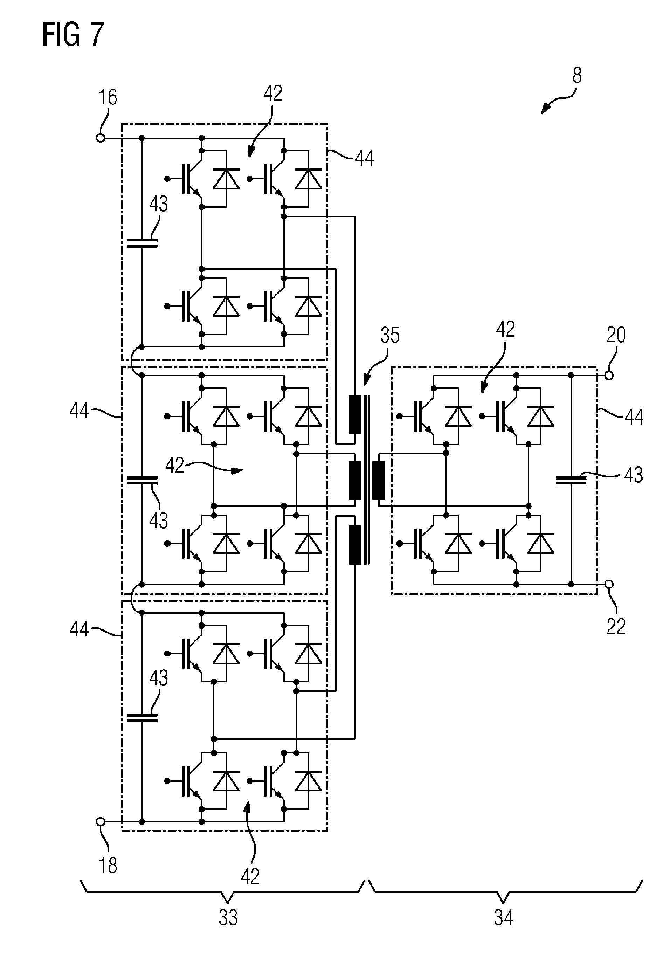

In einer weiteren Variante gemäß FIG 7 ist der DC-DC-Wandler 8 wiederum durch einen bidirektionalen Vollbrückenwandler gegeben, dessen Sekundärkreis 34 dem Sekundärkreis 34 des einfachen bidirektionalen Vollbrückenwandlers aus FIG 5 entspricht und entsprechend eine einzelne Schaltbrücke 42 aufweist. Der Primärkreis 33 des DC-DC-Wandlers 8 gemäß FIG 7 ist abweichend hiervon aber durch eine Reihenschaltung von drei Schaltbrücken 42 gebildet. Die einzelne Schaltbrücke 42 des Sekundärkreises 34 und die drei Schaltbrücken 42 des Primärkreises 33 sind hierbei identisch aufgebaut und bestehen somit insbesondere aus gleichartigen elektronischen Bauteilen. Jede der vier Schaltbrücken 42 bildet, zusammen mit einem jeweils parallel geschalteten Kondensator 43, eines von vier identischen Modulen 44, die in vorgefertigter Form vorliegen und bei der Montage des DC-DC-Wandlers 8 nur noch miteinander sowie mit dem Transformator 35 verdrahtet werden müssen. Mit Hilfe eines solch modularen Aufbaus lässt sich der technische Aufwand für die Fertigung des DC-DC-Wandlers 8 wesentlich reduzieren.

Die Erfindung ist nicht auf die vorstehend beschriebenen Ausführungsbeispiele beschränkt. Vielmehr können auch andere Varianten der Erfindung von dem Fachmann hieraus abgeleitet werden, ohne den Gegenstand der Erfindung zu verlassen. Insbesondere sind ferner alle im Zusammenhang mit den Ausführungsbeispielen beschriebenen Einzelmerkmale auch auf andere Weise miteinander kombinierbar, ohne den Gegenstand der Erfindung zu verlassen.

**Patentansprüche**

1. Energieversorgungseinheit (2), insbesondere für einen Elektromotor (4) eines Elektrofahrzeugs, umfassend einen Gleichspannungs-Wandler (8) mit einem Primärtor (15) zum Anschluss an eine Gleichspannungsquelle, insbesondere einen Akkumulator (6), und mit einem Sekundärtor (19) zur Speisung eines Gleichspannungs-Zwischenkreises (27), wobei ein Niederpotential-Ausgang (22) des Sekundärtors (19) mit einem Hochpotential-Eingang (16) des Primärtors (15) kurzgeschlossen ist.

2. Energieversorgungseinheit (2) nach Anspruch 1, umfassend einen Wechselrichter (10) zur Erzeugung einer Wechselspannung ($U_A$) für den Elektromotor (4), mit einem Gleichspannungstor (28), dessen Hochpotential-Eingang (29) mit dem Hochpotential-Ausgang (20) des Sekundärtors (19) des Gleichspannungs-Wandlers (8) verschaltet ist, und dessen Niederpotential-Eingang (30) mit einem zur Kontaktierung mit dem Minus-Pol (26) des Akkumulators (6) vorgesehenen Niederpotential-Batterieanschluss (31) verbunden ist.

3. Energieversorgungseinheit (2) nach Anspruch 1 oder 2, mit Mitteln zur Überbrückung des Sekundärtors (19) des Gleichspannungs-Wandlers (8).

4. Energieversorgungseinheit (2) nach Anspruch 3, wobei als Mittel zur Überbrückung des Sekundärtors (19) ein dem Sekundärtor (19) nachgeschalteter Schalter (32) vorgesehen ist.

5. Energieversorgungseinheit (2) nach einem der Ansprüche 1 bis 4, wobei der Gleichspannungs-Wandler (8) eine galvanische Entkoppelung zwischen dem Primärtor (15) und dem Sekundärtor (19) aufweist.

6. Energieversorgungseinheit (2) nach einem der Ansprüche 1 bis 5, wobei als Gleichspannungs-Wandler (8) ein bidirektionaler Spannungswandler zum Einsatz kommt.

7. Energieversorgungseinheit (2) nach Anspruch 6, wobei als Gleichspannungs-Wandler (8) ein resonant schaltender bidirektionaler Spannungswandler zum Einsatz kommt.

8. Energieversorgungseinheit (2) nach einem der Ansprüche 1 bis 7, wobei der Gleichspannungs-Wandler (8) primärseitig und/oder sekundärseitig eine Mehrzahl von seriell geschalteten Schaltbrücken (42) aufweist.

FIG 1

EP 2 573 899 A1

FIG 2

## FIG 3

## FIG 4

FIG 5

FIG 6

FIG 7

Europäisches
Patentamt

European
Patent Office

Office européen
des brevets

# EUROPÄISCHER RECHERCHENBERICHT

Nummer der Anmeldung

EP 11 18 2292

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PAVLOVSKY M ET AL: "A ZVS, quasi-ZCS converter with an improved power rating for 14/42V automotive application", PESC'03. 2003 IEEE 34TH. ANNUAL POWER ELECTRONICS SPECIALISTS CONFERENCE. CONFERENCE PROCEEDINGS. ACAPULCO, MEXICO, JUNE 15 - 19, 2003; [ANNUAL POWER ELECTRONICS SPECIALISTS CONFERENCE], NEW YORK, NY :; IEEE, US, Bd. 2, 15. Juni 2003 (2003-06-15), Seiten 628-633, XP010648883, DOI: 10.1109/PESC.2003.1218128 ISBN: 978-0-7803-7754-7 * Zusammenfassung; Abbildungen 1,4 * * Section I Part C * ----- | 1-8 | INV. H02J7/00 H02M3/335 B60L11/18 |
| X | GB 2 476 508 A (CONTROL TECH LTD [GB]) 29. Juni 2011 (2011-06-29) * Abbildungen 1, 2a * * Seite 3, Zeilen 7-13 * * Seite 7 * * Seite 10, Zeile 27 - Seite 11, Zeile 16 * ----- | 1,3-5,8 | |
| X | SEBASTIAN J ET AL: "Improving dynamic response of power factor correctors by using series-switching post-regulator", APPLIED POWER ELECTRONICS CONFERENCE AND EXPOSITION, 1998. APEC '98. C ONFERENCE PROCEEDINGS 1998., THIRTEENTH ANNUAL ANAHEIM, CA, USA 15-19 FEB. 1998, NEW YORK, NY, USA,IEEE, US, Bd. 1, 15. Februar 1998 (1998-02-15), Seiten 441-446, XP010263630, DOI: 10.1109/APEC.1998.647727 ISBN: 978-0-7803-4340-5 * Zusammenfassung; Abbildungen 1a, 1b, 3c, 4b * ----- | 1,3-5 | RECHERCHIERTE SACHGEBIETE (IPC) H02J H02M B60L |

-/--

Der vorliegende Recherchenbericht wurde für alle Patentansprüche erstellt

| Recherchenort | Abschlußdatum der Recherche | Prüfer |
|---|---|---|
| Den Haag | 5. Juli 2012 | Kail, Maximilian |

KATEGORIE DER GENANNTEN DOKUMENTE

X : von besonderer Bedeutung allein betrachtet
Y : von besonderer Bedeutung in Verbindung mit einer
 anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
 nach dem Anmeldedatum veröffentlicht worden ist
D : in der Anmeldung angeführtes Dokument
L : aus anderen Gründen angeführtes Dokument
.............................................................................................
& : Mitglied der gleichen Patentfamilie, übereinstimmendes
 Dokument

EPO FORM 1503 03.82 (P04C03)

Europäisches
Patentamt

European
Patent Office

Office européen
des brevets

# EUROPÄISCHER RECHERCHENBERICHT

Nummer der Anmeldung

EP 11 18 2292

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | LU 44 443 A1 (ACCULULATORENFABRIK SONNENSCHEIN GMBH) 14. November 1963 (1963-11-14) * Abbildungen 1,2 * * Seite 2, letzter Absatz - Seite 3, Absatz 1 * ----- | 1,5,8 | |
| | | | **RECHERCHIERTE SACHGEBIETE (IPC)** |

Der vorliegende Recherchenbericht wurde für alle Patentansprüche erstellt

| Recherchenort | Abschlußdatum der Recherche | Prüfer |
|---|---|---|
| Den Haag | 5. Juli 2012 | Kail, Maximilian |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 11 18 2292

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-07-2012

| Im Recherchenbericht angeführtes Patentdokument | Datum der Veröffentlichung | Mitglied(er) der Patentfamilie | Datum der Veröffentlichung |
|---|---|---|---|
| GB 2476508 A | 29-06-2011 | CN 102428422 A<br>GB 2476508 A<br>WO 2011076707 A2 | 25-04-2012<br>29-06-2011<br>30-06-2011 |
| LU 44443 A1 | 14-11-1963 | KEINE | |

EPO FORM P0461

Für nähere Einzelheiten zu diesem Anhang : siehe Amtsblatt des Europäischen Patentamts, Nr.12/82